# EUROPEAN PATENT SPECIFICATION

(11) **EP 0 764 859 B1**
(45) Date of publication and mention of the grant of the patent: **24.09.2003**
(21) Application number: 96107727.8
(22) Date of filing: 15.05.1996
(51) Int. Cl.: G02B 6/26

(54) **Optical fiber attenuator**
Faseroptische Dämpfungsvorrichtung
Dispositif atténuateur à fibre optique

(30) Priority: 25.08.1995 JP 24098895
(43) Date of publication of application: 26.03.1997
(73) Proprietor: SEIKOH GIKEN Co., Ltd., Matsudo-shi, Chiba-ken (JP)
(72) Inventor: Takahashi, Mitsuo, Matsudo-shi, Chiba-ken (JP)
(74) Representative: Schmidt, Frank-Michael, Dr.-Ing.

(56) References cited:
- EP-A- 0 294 037
- DE-A- 4 237 735
- US-A- 5 109 468
- US-A- 5 384 885
- PATENT ABSTRACTS OF JAPAN vol. 003, no. 025 (E-094), 28 February 1979 & JP 54 002754 A (TOSHIBA CORP), 10 January 1979,

## Description

### BACKGROUND OF THE INVENTION

### 1. Field of the Invention

The present invention generally relates to a new optical fiber attenuator produced by using an optical fiber (hereunder referred to as an optical attenuation fiber), which is intentionally doped with impurities and thus posseses definite optical attenuation characteristics. More particularly, the present invention relates to an optical fiber attenuator which can accurately impart a fixed optical attenuation coefficient to an optical attenuation fiber used therein even if it is difficult to manufacture the optical attenuation fiber by precisely controlling the optical attenuation per predetermined length thereof (namely, the attenuation coefficient thereof).

### 2. Description of the Related Art

A fixed value fiber optic attenuator is known from the US 5,109,468. The attenuation is achieved by providing an optical fiber pathway, that has a bend or a radial offset between two ends of the fiber.

In the EP 0 294 037 an optical fiber attenuator is disclosed comprising an attenuation fiber that is coiled inside a housing. For a required attenuation value the attenuation fiber is cut to a predetermined length. However, this arrangement needs a rather large height of the housing.

The inventor of the present invention has made an attempt to produce an optical attenuator of the connector type or an optical attenuator connectable with a connector by utilizing an optical fiber which is doped with impurities and thus has a considerably large optical attenuation coefficient or optical attenuation per unit fiber length.

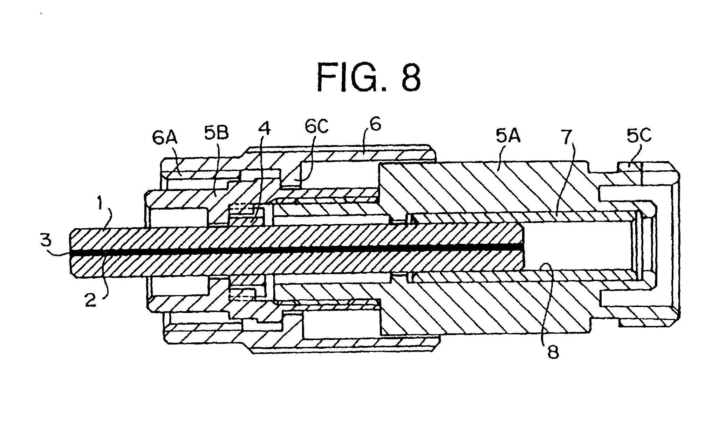

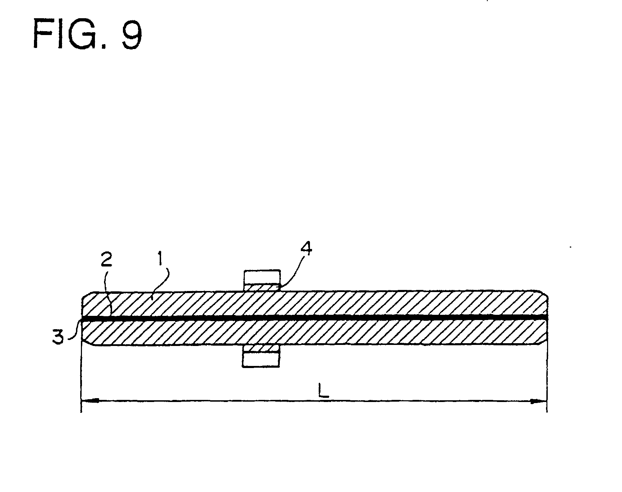

Fig. 8 is a sectional view of a conventional optical attenuator of the connector type. Fig. 9 is a sectional view of a ferrule assembly portion taken out of the optical attenuator. A through hole 2 is bored in the central portion of a cylindrical ferrule 1 of the ferrule assembly portion of Fig. 9 for use in the optical attenuator. The optical attenuation fiber 3 is inserted into this through hole 2 and is glued to the inner surface thereof. Further, a flange 4 is fixed onto the circumferential surface of the ferrule 1. This flange 4 serves to limit the positions in the direction of the axis of and in the circumferential direction of the ferrule assembly portion.

A plug housing 5 (Fig. 8) consists of body components 5A and 5B. Further, an alignment sleeve 7 is provided in the component 5A. An end part of the cylindrical ferrule 1 of the ferrule assembly portion is inserted into the alignment sleeve 7 and is connected to the component 5B in such a way that the component 5B inhibits the rotation of the flange 4. A coupling nut 6 is rotatably mounted on the plug housing 5.

An optical fiber plug having an attenuator at an edge portion thereof is formed by connecting a ferrule of another optical fiber connector (not shown) with the other end part of the alignment sleeve 7.

Here, supposing that the axial length L of the ferrule 1 is constant and the optical attenuation per unit length of the optical attenuation fiber is A dB, the formed optical attenuator has total attenuation of LxA dB. Generally, optical attenuation of 3, 5, 10, 15 or 20 dB is normally required of an optical attenuator. Further, arbitrary intermediate attenuation values such as 8±0.8 dB and 13±1.3 dB are sometimes required of the attenuator when utilized for some use.

In this case, if there is a variation or error in optical attenuation per unit length of an optical fiber of the aforementioned type, some problem occurs. For example, if desired optical attenuation is 20±2 dB in the case that the axial length L of the ferrule 1 is equal to 20 mm, the optical fiber should be produced in such a way that the optical attenuation per unit length of the optical fiber is A with an error of not over ±10 %.

However, in view of the current state of art in optical fiber manufacturing technology, when optical fibers are produced stably, the optical attenuation per unit length of the optical fiber becomes A with an error of ±20 % or so. Thus, if L = 20 mm, the optical attenuation per unit length of the optical fiber becomes large, namely, 20 ± 4 dB. Consequently, the value of the optical attenuation per unit length of the optical fiber cannot be within the specification.

If optical fibers, whose optical attenuation per unit length is A with an error of not over ±10 %, are selected, the fraction defective of the optical fibers becomes inevitably large. Because of the difficulty in regulating the lengths of ferrules 1 individually, there is the necessity of checking the produced optical attenuation fibers and selecting and using only acceptable optical attenuation fibers. Thus, inevitably, the manufacturing cost becomes high.

Optical attenuation fibers are adapted to absorb light, as a result of doping silicon glass of ordinary optical fibers with impurities such as Co and Cr. The management of the manufacturing process thereof is not easy. Moreover, it is extremely difficult to obtain desired attenuation characteristics per unit length of an optical attenuation fiber. It, however, has been known that nearly uniform attenuation characteristics can be obtained in a single lot.

Accordingly, an object of the present invention is to realize the mass production of optical attenuators which can provide arbitrary desired attenuation, by using optical attenuation fibers.

Further, another object of the present invention is to provide optical attenuators of various forms, which can be used for various uses.

### SUMMARY OF THE INVENTION

To achieve the foregoing objects, in accordance with the present invention, there is provided a method for assembling an optical fiber attenuator according to claim 1. There are further provided optical fiber attenuators according to claims 4 and 10.

The optical attenuation fiber is cut or shortened by being polished in such a manner as to be able to obtain predetermined attenuation when connected to the ordinary optical fiber before or after fixed to the ferrule.

In the case of the aforementioned optical attenuator, a connection between the optical attenuation fiber and the ordinary optical fiber may be made by performing a fusion splicing through the use of a discharge arc.

Further, in one case of the aforementioned optical attenuators, the ordinary optical fiber is cut to a fixed length. Moreover, a cut edge portion of the ordinary optical fiber is fixed to another ferrule and is polished. Furthermore, the latter ferrule is coupled to the former ferrule for accepting and fixing the latter end portion of the optical attenuation fiber through an alignment sleeve.

In the optical attenuator using the two ferrules, an angular positioning flange may be provided in such a manner as to be integral with the alignment sleeve.

In the optical attenuator, end-faces of the optical attenuation fiber and the former ferrule and end-faces of the ordinary optical fiber and the latter ferrule are polished slantwise with respect to a plane perpendicular to the optical axis thereof. Thereby, the reflection loss thereof can be reduced.

Moreover, in the optical attenuator, the end-face of each of the ferrules may be a face inclined at an angle of 8 degrees or more to the plane perpendicular to the optical axis thereof and further may be polished into a spherical surface. Thereby, the reflection loss thereof can be further reduced.

In the optical attenuator, the ferrules are optical fiber connector ferrules. The connecting position, at which the ferrule is connected to the ordinary optical fiber, is established in the ferrule. Moreover, a coating or covering portion of the ordinary optical fiber is fixed to a pipe with a flange, which is secured to the ferrule. Thus the optical attenuator is formed in such a manner as to be of the type in which the optical attenuator is built into the optical fiber connector ferrule.

### BRIEF DESCRIPTION OF THE DRAWINGS

Other features, objects and advantages of the present invention will become apparent from the following description of preferred embodiments with reference to the drawings in which like reference characters designate like or corresponding parts throughout several views, and in which:
FIG. 1 is a sectional diagram for illustrating the welding step for forming an optical attenuation fiber assembly constitutive of a first embodiment of the optical attenuator according to the present invention;
FIG. 2 is a sectional view of the optical attenuation fiber assembly formed by performing the welding step of FIG. 1;
FIG. 3 is a sectional view showing a first step of assembing the optical attenuator according to the first embodiment of the present invention;
FIG. 4 is a sectional view showing the assembled optical attenuator according to the first embodiment of the present invention;
FIG. 5 is a sectional view of the first embodiment according to Fig. 4 of the optical attenuator of the present invention, which is mounted into the plug housing of a connector;
FIG. 6 is a sectional view of another embodiment of the optical attenuator of the present invention;
FIG. 7 is a sectional view of still another embodiment of the optical attenuator according to the present invention;
FIG. 8 is a sectional view of a conventional optical attenuator, which is produced by building only an optical attenuation fiber into a single-core optical fiber connector, for illustrating a problem caused therein; and
FIG. 9 is a sectional view of a ferrule assembly portion taken out of the optical attenuator of FIG. 8.

### DETAILED DESCRIPTION OF THE PREFERRED EMBODIMENTS

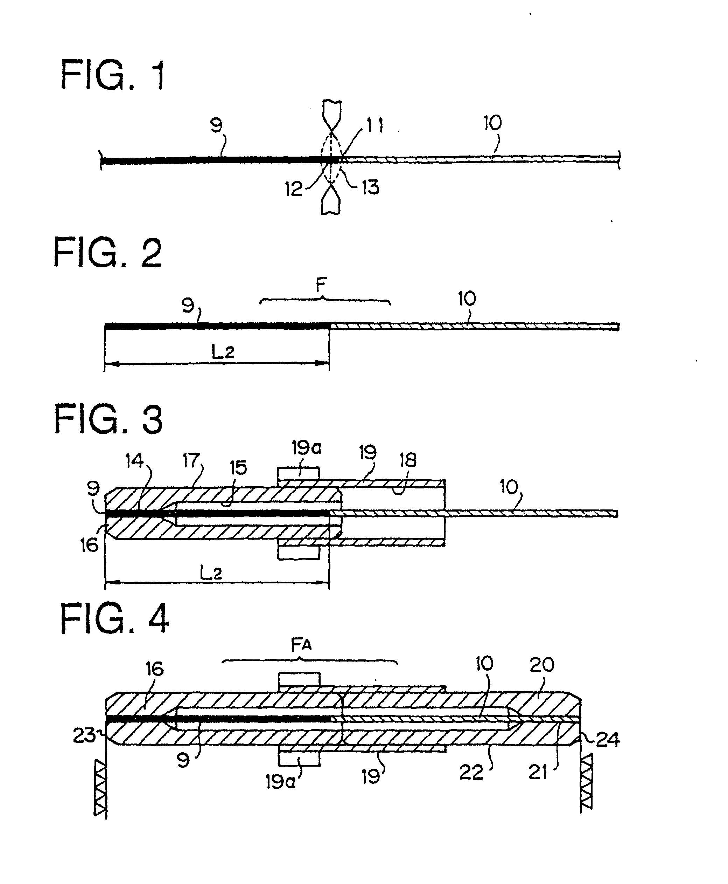

Hereinafter, preferred embodiments of the present invention will be described in detail by referring to the accompanying drawings. FIG. 4 is a sectional view of an optical attenuator according to a first embodiment of the present invention.

FIG. 1 is a sectional diagram for illustrating a welding step for forming an optical attenuation fiber assembly (FA) constitutive of said first embodiment of optical attenuator.

As illustrated in FIG. 1, an end-face 11 of an optical attenuation fiber 9 of indefinite length (whose attenuation per unit length may differ from a nominal value) is butted against an end-face 12 of an ordinary optical fiber 10 of also indefinite length. Then, a fusion splicing is performed on the surfaces 11 and 12 by using a discharge arc 13. Subsequently, as illustrated in FIG. 2, the optical attenuation fiber 9 is cut to a length L₂, by which the desired optical attenuation is obtained. Moreover, the ordinary optical fiber 10 is also cut to an appropriate length such that the total length of the optical attenuation fiber assembly (F) thus formed is substantially equal to the overall length of the two ferrules 16 and 20 assembled together as described thereafter.

As shown in FIG. 3, a minute through hole 14, which is used to precisely accept an end portion of the optical attenuation fiber 9 of the assembly F, and a stepped or counterbored hole 15 are bored in the central portion of a first cylindrical ferrule 16. Further, another through hole 18, into which the outside cylindrical surface 17 of a ferrule 16 is inserted, is bored in a cylindrical alignment sleeve 19. A nearly half-length part of the first ferrule 16 is inserted into and glued to the cylindrical alignment sleeve 19. Then, the optical attenuation fiber 9 of the optical attenuation fiber assembly (F) is inserted into and glued to the central minute through hole 14 of the first ferrule 16.

Incidentally, the reason why two ferrules are used in the optical fiber assembly of the present invention is that each of the optical attenuation fiber 9 and the ordinary optical fiber 10 cannot be inserted into the central minute through hole of the other of these ferrules owing to the fact that the optical axes of the optical attenuation fiber and the ordinary optical fiber cannot be aligned (namely, the misalignment between the optical axes thereof) at the fusion splicing connection portion therebetween, and to the deformation of these optical fibers.

The ordinary optical fiber 10 of the assembly F is inserted into and fixed to a second ferrule 20 which is of nearly shape with the first ferrule 16. As shown in FIG. 4, the ordinary optical fiber 10 is inserted into and glued to the central minute through hole 21 of the second ferrule 20. Simultaneously, the outside cylindrical surface 22 of the ferrule 20 is inserted into and glued to the alignment sleeve hole 18. Thereafter, a polishing finish is put on each of ferrule end surfaces 23 and 24. Thereby, the optical attenuator (FA) is obtained.

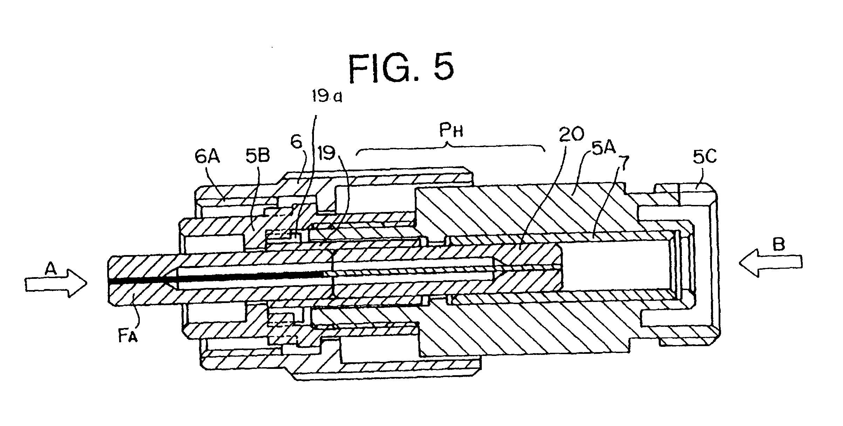

FIG. 5 is a sectional view of an example of an optical attenuator of the present invention, in which the aforementioned optical attenuator (FA) is mounted into the plug housing (PH) of a single-core optical fiber connector comprising the two body components 5A and 5B. The ferrule 20 provided at the side of the ordinary optical fiber 10 of the optical attenuation fiber assembly (F) is inserted into and coupled to an alignment sleeve 7 provided in the part 5A of the plug housing PH. The flange 19a of the alignment sleeve 19 of the optical attenuator (FA) is sandwiched and held between the body components 5A and 5B in such a manner as to be in a state in which the rotation of the flange 19a is restrained. Further, the attenuator can be inserted into an optical fiber line by inserting optical fibers into the attenuator from the directions of arrows A and B, respectively, and connecting optical fibers with each other.

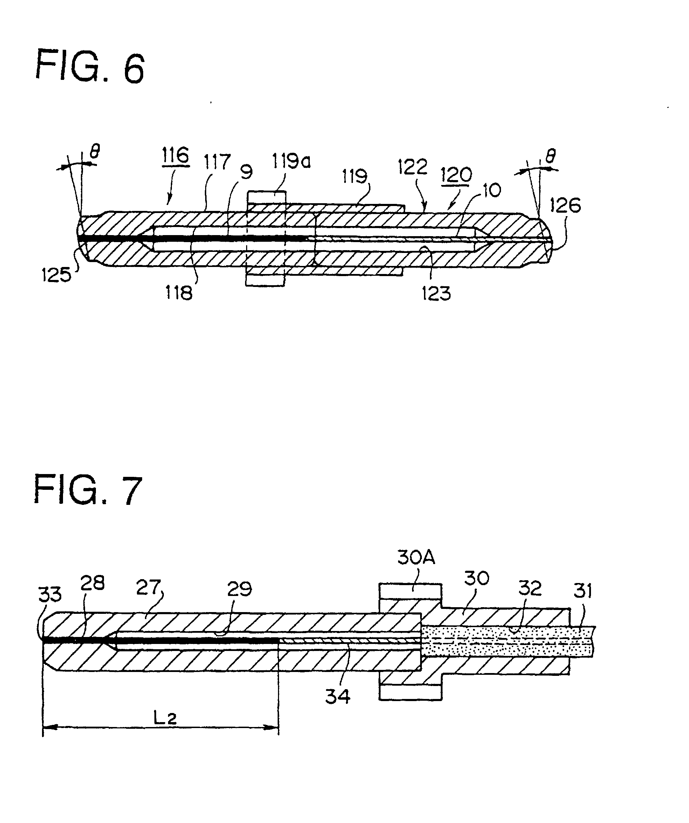

FIG. 6 is a sectional view of another embodiment of optical attenuator of the present invention. In the case of this embodiment, an optical attenuation fiber assembly (F) consists of an optical attenuation fiber 9 and an ordinary optical fiber 10. The method of manufacturing or assembling this optical attenuation fiber assembly is the same as described by referring to FIGs. 1 and 2. A first ferrule 116 has thin tip end portions. Further, a hole for accepting and supporting the optical attenuation fiber 9 and a stepped hole 118 communicating with such a hole are bored in the ferrule 116. Moreover, an end portion of the optical attenuation fiber 9 is accepted by and glued and fixed to the hole for accepting and supporting the optical attenuation fiber 9. Similarly, a second ferrule 120 has thin tip end portions. Further, a hole for accepting and supporting the ordinary optical fiber 10 and a stepped hole 123 communicating with such a hole are bored in the ferrule 120. Moreover, an end portion of the ordinary optical fiber 10 is accepted by and glued and fixed to the hole for accepting and supporting the ordinary optical fiber. Each of the ferrules 116 and 120 is inserted into and fixed to a sleeve 119 with a flange 119a.

An end portion 125 of the ferrule 116 and an end portion 126 of the ferrule 120 are formed as surfaces inclined at angles of 8 degrees or more to planes which are perpendicular to the optical axis of the assembly and are polished into spherical surface.

FIG. 7 is a sectional view of still another embodiment of the present invention, in which an optical attenuation fiber assembly (F) is mounted into an optical connector ferrule.

An optical attenuation fiber 33 is connected to an ordinary optical fiber portion 34, from which a covering portion 31 is eliminated, by performing a discharge arc welding.

The optical attenuation fiber 33 is cut at an end thereof in such a manner as to become slightly longer than the length designated by L₂ in this figure. A covering portion 31 of the optical fiber is inserted into a hole 32 of a pipe 30 with a flange 30A and is fixed thereto. The connecting point, at which the optical attenuation fiber 33 and the ordinary optical fiber 34 are welded, is located in a stepped hole. This is because there is a fear that each of the optical attenuation fiber and the ordinary optical fiber cannot be inserted into the central minute through hole of the other of these fibers owing to the fact that the optical axes of the optical attenuation fiber and the ordinary optical fiber cannot be aligned (namely, owing to the misalignment between the optical axes thereof) at the fusion splicing connection portion therebetween, and to the deformation of these optical fibers.

Furthermore, a stepped hole is counterbored in a flange-side portion of the hole 32 of the pipe 30. The base portion of a ferrule 27 is inserted into this counterbored hole and is fixed thereto. Both end portions of the optical attenuation fiber 33 and the ferrule 17 surrounding this fiber are polished simultaneously. This assembly is used as an optical connector having an optical attenuation function.

As above described, it is difficult to stably produce optical attenuation fibers, each of which exhibits a predetermined value of optical attenuation per unit length thereof. However, even in the case of using an attenuation optical fiber which causes a large error in optical attenuation thereof when manufactured, an optical attenuation fiber assembly exhibiting accurate optical attenuation can be produced by employing an optical attenuator which uses an optical attenuation fiber of the present invention.

Moreover, a large number of kinds of optical attenuation fiber assemblies, which exhibit arbitrary optical attenuation, can be easily produced. Furthermore, only the regulation of the length of an optical attenuation fiber is necessary for regulating the optical attenuation caused by the optical attenuation fiber assembly. For such a purpose, it is not necessary at all to regulate other components, for example, to change the length of a ferrule.

Further, the optical attenuator of the present invention can be incorporated into optical devices, each of which is required to have an optical attenuation function, other than the aforementioned embodiments.

The scope of the present invention, therefore, is to be determined solely by the appended claims.

## Claims

1. Method for assembling an optical fiber attenuator (FA) comprising a ferrule (16,20;116,120;27) of predetermined length,
wherein
a first end of an optical attenuation fiber (9;33) is connected to a first end of a non-coated portion (10;34) of an ordinary optical fiber
the optical attenuation fiber (9;33) is cut or is shortened by being polished to an effective length (L₂) before or after being secured to the ferrule (16,20;116,120;27) so as to achieve a desired attenuation
the length of the non-coated portion (10;34) of the ordinary optical fiber is selected in function of the length (L₂) selected for the finite section of the attenuation fiber (9;33) so as to result in an overall length of the finite section of the optical attenuation fiber and the finite non-coated portion (10;34) of the ordinary optical fiber that is equal to the predetermined length of the ferrule (16,20;116,120;27), and
wherein
the second end of the finite section of the optical attenuation fiber (9;33) is inserted and fixed in a corresponding end (14;28) of the ferrule (16,20;116,120;27) so that said finite section of optical attenuation fiber (9;33) prolonged by said finite non-coated end portion (10;34) of ordinary fiber extends from said end to the other end of the ferrule (16,20;116,120;27).

2. Method according to claim 1, the ferrule (16,20;116,120) comprising a first part (16;116) and a second part (20;120) of predetermined length,
wherein
the non-coated portion (10) of ordinary optical fiber is cut to a finite length,
the second end of said non-coated portion (10) of ordinary optical fiber is inserted in the corresponding end of the second part (20;120) of the ferrule (16,20;116,120), and wherein
the second part (20;120) and the first part (16;116) are coupled together through an alignment sleeve (19;119).

3. Method according to claim 1, a coated portion of the ordinary optical fiber (31) of infinite length being provided adjacent to said non-coated portion (34), wherein
said ferrule (27) is inserted in a first end of a pipe (30), and the optical attenuation fiber (33) and the finite non-coated portion (34) of the ordinary optical fiber (31) are inserted through the second end of said pipe up to the ferrule end opposed to that connected to the pipe before the second end of the optical attenuation fiber is fixed in said ferrule, opposite end.

4. An optical fiber attenuator (FA) including an overall ferrule (16,20;116,120) comprising a first part (16;116) and a second part (20;120) longitudinally assembled together, said overall ferrule (16,20;116,120) thus assembled presenting a predetermined length, and
an attenuation fiber assembly (F) mounted inside said overall ferrule (16,20;116,120) and having an overall length equal to the predetermined length of the overall ferrule,
wherein said attenuation fiber assembly (F) comprises a finite section of optical attenuation fiber (9) of desired attenuation connected to a finite section of ordinary fiber (10),
wherein the attenuation per unit length of the used attenuation fiber (9) can differ from a nominal value so that the effective lengt (L₂) of said finite section of attenuation fiber is selected so as to achieve said desired attenuation, and
wherein the length of the finite section of ordinary fiber (10) is selected in function of the effective length selected for the attenuation fiber (9) in order to result in an overall length for the fiber assembly (F) which is equal to the predetermined length of the overall ferrule (16,20;116,120).

5. The optical fiber attenuator according to claim 4, wherein the optical attenuation fiber (9) and the ordinary optical fiber (10) are fusion spliced by using a discharge arc (13).

6. The optical fiber attenuator according to claim 4, wherein the ferrule second part (20,120) is coupled to the ferrule first part (16;116) through an alignment sleeve (19;119).

7. The optical attenuator according to claim 6, wherein an angular positioning flange (19a;119a) is integral with the alignment sleeve (19;119).

8. The optical fiber attenuator according to claim 6, wherein the end-faces of the optical attenuation fiber (9) and the ferrule first part (116) and the end-faces of the ordinary optical fiber (10) and the ferrule second part (120) are polished slantwise with respect to a plane perpendicular to the optical axis of the ferrule (116,120).

9. The optical fiber attenuator according to claim 8, wherein the end-face (125,126) of each of the first and the second part of the ferrule is a face inclined at an angle of 8 degrees or more to the plane perpendicular to the optical axis and further is polished into a spherical surface.

10. An optical fiber attenuator (FA) including an overall housing (27,30) comprising a ferrule (27) of predetermined length connected to one end of a pipe (30),
a finite section of optical attenuation fiber (33) having a desired attenuation and being connected to a non-coated end portion (34) of a coated ordinary fiber (31) of indefinite length,
wherein said non-coated end portion (34) of ordinary fiber (31) prolonged by said finite section of attenuation fiber (33) is mounted in said ferrule (27) while presenting an overall length equal to the predetermined length of said ferrule (27), and wherein a coated portion of said ordinary fiber (31) of infinite length adjacent to said non-coated end portion (34) is mounted in said pipe (30),
wherein the attenuation per unit length of the attenuation fiber (33) can differ from a nominal value so that the effective length (L₂) of said finite section of attenuation fiber (33) is selected so as to achieve said desired attenuation, and
wherein the length of the non-coated end portion (34) of the coated ordinary fiber (31) is selected in function of the effective length (L₂) selected for the attenuation fiber (33) in order to result in an overall length for said non-coated end portion (34) of ordinary fiber prolonged by said finite section of attenuation fiber (33) which is equal to the predetermined length of the ferrule (27).

## Patentansprüche

1. Verfahren zum Zusammensetzen einer Faseroptik-Dämpfungseinrichtung (FA), die eine Ferrule (16, 20; 116, 120; 27) einer festgelegten Länge aufweist, wobei
ein erstes Ende einer Dämpfungs-Faseroptik (9; 33) mit einem ersten Ende eines nicht-ummantelten Teils (10; 34) einer üblichen Faseroptik verbunden wird,
die Dämpfungs-Faseroptik (9; 33) zum Erzielen einer gewünschten Dämpfung geschnitten oder durch Polieren auf eine effektive Länge (L₂) gekürzt wird, bevor oder nachdem sie an der Ferrule (16, 20; 116, 120; 27) befestigt wird,
die Länge des nicht-ummantelten Teils (10; 34) der üblichen Faseroptik als Funktion der für den begrenzten Abschnitt der Dämpfungsfaser (9; 33) gewählten Länge (L₂) gewählt wird, so daß sich eine Gesamtlänge des begrenzten Abschnitts der Dämpfungs-Faseroptik und des begrenzten nicht-ummantelten Anteils (10; 34) der üblichen Faseroptik ergibt, der gleich der festgelegten Länge der Ferrule (16, 20; 116, 120; 27) ist, und wobei
das zweite Ende des begrenzten Abschnitts der Dämpfungs-Faseroptik (9; 33) in ein zugehöriges Ende (14; 28) der Ferrule (16, 20; 116, 120; 27) eingeführt und befestigt wird, so daß sich der begrenzte Abschnitt der Dämpfungs-Faseroptik (9; 33), verlängert durch den begrenzten nicht-ummantelten Endteil (10; 34) der üblichen Faser, vom besagten Ende zu dem anderen Ende der Ferrule (16, 20; 116, 120;27) erstreckt.

2. Verfahren nach Anspruch 1, wobei die Ferrule (16, 20; 116, 120) einen ersten Teil (16; 116) und einen zweiten Teil (20; 120) von festgelegter Länge aufweist, wobei
der nicht-ummantelte Teil (10) der üblichen Faseroptik auf eine begrenzte Länge geschnitten wird,
das zweite Ende des nicht-ummantelten Teiles (10) der üblichen Faseroptik in das zugehörige Ende des zweiten Teils (20; 120) der Ferrule (16, 20; 116, 120) eingeführt wird, und wobei
der zweite Teil (20; 120) und der erste Teil (16; 116) miteinander durch eine Ausrichtungshülse (19; 119) gekoppelt werden.

3. Verfahren nach Anspruch 1, wobei ein ummantelter Teil der üblichen Faseroptik (31) von unbestimmter Länge angrenzend an den nicht-ummantelten Teil (34) bereitgestellt wird, wobei
die Ferrule (27) in ein erstes Ende eines Rohrstücks (30) eingeführt wird und die Dämpfungs-Faseroptik (33) und der begrenzte nicht-ummantelte Teil (34) der üblichen Faseroptik (31) durch das zweite Ende des Rohrstücks, das dem mit der Röhre verbundenen gegenüberliegt, bis zum Ferrulenende hin eingesteckt wird, bevor das zweite Ende der Dämpfungs-Faseroptik in dem gegenüberliegenden Ende der Ferrule befestigt wird.

4. Eine Faseroptik-Dämpfungseinrichtung (FA) mit einer Gesamtferrule (16, 20; 116, 120), die einen longitudinal zusammengesetzten ersten (16; 116) und zweiten Teil (20; 120) aufweist, wobei die Gesamtferrule (16, 20; 116, 120) mit einer festgelegten Länge zusammengesetzt ist; und
eine Dämpfungsfaser-Anordnung (F), die in der Gesamtferrule (16, 20; 116, 120) befestigt ist und eine Gesamtlänge aufweist, die gleich der festgelegten Länge der Gesamtferrule ist,
wobei die Dämpfungsfaser-Anordnung (F) einen begrenzten Abschnitt einer Dämprungs-Faseroptik (9) von gewünschter Dämpfung aufweist, der mit einem begrenzten Abschnitt einer üblichen Faser (10) verbunden ist,
wobei die längenbezogene Dämpfung der verwendeten Dämpfungsfaser (9) von einem Nominalwert abweichen kann, so daß die effektive Länge (L₂) des begrenzten Abschnitts der Dämpfungsfaser derart ausgewählt ist, daß die erwünschte Dämpfung erzielt wird und
wobei die Länge des begrenzten Abschnitts der üblichen Faser (10) als Funktion der für die Dämpfungsfaser (9) gewählten effektiven Länge ausgewählt ist, um eine Gesamtlänge der Faser-Anordnung (F) zu erzielen, die gleich der festgelegten Länge der Gesamtferrule (16, 20; 116, 120) ist.

5. Die Faseroptik-Dämpfungseinrichtung nach Anspruch 4, wobei die Dämpfungs-Faseroptik (9) und die übliche Faseroptik (10) unter Verwendung eines Entladungsbogens (13) thermisch gespleißt sind.

6. Die Faseroptik-Dämpfungseinrichtung nach Anspruch 4, wobei der zweite Teil (20; 120) der Ferrule mit dem ersten Teil (16; 116) der Ferrule durch eine Ausrichtungshülse (19; 119) gekoppelt ist.

7. Die Faseroptik-Dämpfungseinrichtung nach Anspruch 6, wobei an der Ausrichtungshülse (19; 119) ein Winkel-Ausrichtungsflansch (19a; 119a) integral angeordnet ist.

8. Die Faseroptik-Dämpfungseinrichtung nach Anspruch 6, wobei die Endflächen der Dämpfungs-Faseroptik (9) und der erste Teil (116) der Ferrule und die Endflächen der üblichen Faseroptik (10) und der zweite Teil (120) der Ferrule in bezug zu der zur optischen Achse der Ferrule (116, 120) senkrecht verlaufenden Ebene geneigt poliert sind.

9. Die Faseroptik-Dämpfungseinrichtung nach Anspruch 8, wobei die Endfläche (125, 126) jeweils des ersten und des zweiten Teils der Ferrule eine Fläche ist, die in einem Winkel von 8 Grad oder mehr gegen die zu der optischen Achse senkrecht verlaufende Ebene geneigt ist und ferner zu einer sphärischen Oberfläche poliert ist.

10. Eine Faseroptik-Dämpfungseinrichtung (FA) mit einem Gesamtgehäuse (27, 30) mit einer Ferrule (27) einer festgelegten Länge, die mit einem Ende eines Rohrstücks (30) verbunden ist,
einem begrenzten Abschnitt einer Dämpfungs-Faseroptik (33), die eine gewünschte Dämpfung aufweist und mit einem nicht-ummantelten Endteil (34) einer ummantelten üblichen Faser (31) von unbestimmter Länge verbunden ist,
wobei der nicht-ummantelte durch den begrenzten Abschnitt der Dämpfungsfaser (33) verlängerte Endteil (34) der üblichen Faser (31) in der Ferrule (27) befestigt ist und eine Gesamtlänge aufweist, die gleich der festgelegten Länge der Ferrule (27) ist, und wobei ein ummantelter Teil der üblichen Faser (31) von unbestimmter Länge angrenzend an den nicht-ummantelten Endteil (34) in dem Rohrstück (30) befestigt ist,
wobei die längenbezogene Dämpfung der Dämpfungsfaser (33) von einem Nominalwert abweichen kann, so daß die effektive Länge (L₂) des begrenzten Abschnitts der Dämpfungsfaser (33) zum Erzielen der erwünschten Dämpfung ausgewählt ist, und
wobei die Länge des nicht-ummantelten Endteils (34) der ummantelten üblichen Faser (31) als Funktion der effektiven Länge (L₂) ausgewählt ist, die für die Dämpfungsfaser (33) ausgewählt ist, um eine Gesamtlänge für den nicht ummantelten Endteil (34) der durch den begrenzten Abschnitt der Dämpfungsfaser (33) verlängerten üblichen Faser zu erzielen, die gleich der festgelegten Länge der Ferrule (27) ist.

## Revendications

1. Procédé d'assemblage d'un atténuateur à fibre optique (FA) comprenant une ferrule (16, 20 ; 116, 120 ; 27) de longueur prédéterminée, dans lequel une première extrémité d'une fibre d'atténuation optique (9 ; 33) est raccordée à une première extrémité d'une portion non revêtue (10 ; 34) d'une fibre optique ordinaire,
la fibre d'atténuation optique (9 ; 33) est coupée ou raccourcie par polissage jusqu'à une longueur efficace (L₂) avant ou après avoir été assujettie à la ferrule (16, 20 ; 116, 120 ; 27) de façon à obtenir une atténuation souhaitée,
la longueur de la portion non revêtue (10 ; 34) de la fibre optique ordinaire est choisie en fonction de la longueur (L₂) choisie pour la section finie de la fibre d'atténuation (9 ; 33) de façon à ce que la longueur globale de la section finie de la fibre d'atténuation optique et de la portion finie non revêtue (10 ; 34) de la fibre optique ordinaire soit égale à la longueur prédéterminée de la ferrule (16, 20 ; 116, 120 ; 27), et dans lequel
la deuxième extrémité de la section finie de la fibre d'atténuation optique (9 ; 33) est insérée et fixée dans une extrémité correspondante (14 ; 22) de la ferrule (16, 20 ; 116, 120 ; 27) de façon à ce que ladite section finie de la fibre d'atténuation optique (9 ; 33) prolongée par ladite portion d'extrémité finie non revêtue (10 ; 34) de la fibre ordinaire se prolonge depuis ladite extrémité jusqu' à l'autre extrémité de la ferrule (16, 20 ; 116, 120 ; 27).

2. Procédé selon la revendication 1, la ferrule comprenant une première partie (16 ; 116) et une deuxième partie (20 ; 120) de longueur prédéterminée, dans lequel
la portion non revêtue (10) de la fibre optique ordinaire est coupée à une longueur finie,
la deuxième extrémité de ladite portion non revêtue (10) de la fibre optique ordinaire est insérée dans l'extrémité correspondante de la deuxième partie (20 ; 120) de la ferrule (16, 20 ; 116, 120), et dans lequel
la deuxième partie (20 ; 120) et la première partie (16 ; 116) sont accouplées par un manchon d'alignement (19 ; 119).

3. Procédé selon la revendication 1, une portion revêtue de la fibre optique ordinaire (31) de longueur indéfinie étant prévue adjacente à ladite portion non revêtue (34), dans lequel
ladite ferrule (20) est insérée dans une première extrémité d'un conduit (30) et la fibre d'atténuation optique (33) et la portion finie non revêtue (34) de la fibre optique ordinaire (31) sont insérées par la deuxième extrémité dudit conduit jusqu'à l'extrémité de la ferrule opposée à celle raccordée au conduit avant que la deuxième extrémité de la fibre d'atténuation optique soit fixée dans ladite extrémité opposée de la ferrule.

4. Atténuateur à fibre optique (FA) comportant
une ferrule globale (16, 20 ; 116, 120) comprenant une première partie (16 ; 116) et une deuxième partie (20 ; 120) assemblées longitudinalement, ladite ferrule globale (16, 20 ; 116, 120) ainsi assemblée présentant une longueur prédéterminée, et
un ensemble à fibre d'atténuation (F) monté à l'intérieur de ladite ferrule globale (16, 20 ; 116, 120) et présentant une longueur globale égale à la longueur prédéterminée de la ferrule globale,
dans lequel ledit ensemble à fibre d'atténuation (F) comprend une section finie de la fibre d'atténuation optique (9) d'atténuation souhaitée raccordée à une section finie de la fibre ordinaire (10),
dans lequel l'atténuation par unité de longueur de la fibre d'atténuation (9) utilisée peut différer d'une valeur nominale, si bien que la longueur efficace (L₂) de ladite section finie de la fibre d'atténuation est choisie de manière à obtenir ladite atténuation souhaitée, et
dans lequel la longueur de la section finie de la fibre ordinaire (10) est choisie en fonction de la longueur efficace choisie pour la fibre d'atténuation (9) de façon à ce que la longueur globale de l'ensemble à fibre (F) soit égale à la longueur prédéterminée de la ferrule globale (16, 20 ; 116, 120).

5. Atténuateur à fibre optique selon la revendication 4, dans lequel la fibre d'atténuation optique (9) et la fibre optique ordinaire (10) sont épissées par fusion à l'aide d'un arc à décharge (13).

6. Atténuateur à fibre optique selon la revendication 4, dans lequel la deuxième partie (20 ; 120) de la ferrule est couplée à la première partie (16 ; 116) de la ferrule par un manchon d'alignement (19 ; 119).

7. Atténuateur à fibre optique selon la revendication 6, dans lequel une bride de positionnement angulaire (19a ; 119a) est solidaire du manchon d'alignement (19 ; 119).

8. Atténuateur à fibre optique selon la revendication 6, dans lequel les faces d'extrémité de la fibre d'atténuation optique (9) et de la première partie (116) de la ferrule et les faces d'extrémité de la fibre optique ordinaire (10) et de la deuxième partie (120) de la ferrule font l'objet d'un polissage oblique par rapport à un plan perpendiculaire à l'axe optique de la ferrule (116, 120).

9. Atténuateur à fibre optique selon la revendication 8, dans lequel la face d'extrémité (125, 126) de chacune des première et deuxième parties de la ferrule est une face inclinée suivant un angle d'au moins 8 degrés par rapport au plan perpendiculaire à l'axe optique et fait en outre l'objet d'un polissage produisant une surface sphérique.

10. Ensemble à fibre pour atténuateur à fibre optique (FA) comportant un boîtier global (27, 30) comprenant une ferrule (27) de longueur prédéterminée raccordée à une extrémité d'un conduit (30),
une section finie de fibre d'atténuation optique (33) présentant une atténuation souhaitée et raccordée à une portion d'extrémité non revêtue (34) d'une fibre ordinaire revêtue (31) de longueur indéfinie,
dans lequel ladite portion d'extrémité non revêtue (34) de la fibre ordinaire (31) prolongée par ladite section finie de la fibre d'atténuation (33) est montée dans ladite ferrule (27) en présentant une longueur globale égale à la longueur prédéterminée de ladite ferrule (27), et
dans lequel une portion revêtue de ladite fibre ordinaire (31) de longueur indéfinie adjacente à ladite portion d'extrémité non revêtue (34) est montée dans ledit conduit (30),
dans lequel l'atténuation par unité de longueur de la fibre d'atténuation (33) peut différer d'une valeur nominale, si bien que la longueur efficace (L₂) de ladite section finie de la fibre d'atténuation (33) est choisie de manière à obtenir ladite atténuation souhaitée, et
dans lequel la longueur de la portion d'extrémité non revêtue de la fibre ordinaire revêtue (31) est choisie en fonction de la longueur efficace (L₂) choisie pour la fibre d'atténuation (33) de façon à ce que la longueur globale de ladite portion d'extrémité non revêtue (34) de la fibre ordinaire prolongée par ladite section finie de la fibre d'atténuation (33) soit égale à la longueur prédéterminée de la ferrule (27).
